# EUROPÄISCHE PATENTSCHRIFT

(11) **EP 3 034 437 B1**
(45) Veröffentlichungstag und Bekanntmachung des Hinweises auf die Patenterteilung: **31.10.2018**
(21) Anmeldenummer: 14197953.4
(22) Anmeldetag: 15.12.2014
(51) Int. Cl.: B65G 23/08, B65G 13/06

(54) **Antriebseinheit für eine Transportrolle**
Drive unit for a transport roller
Unité d'entraînement pour un rouleau de transport

(43) Veröffentlichungstag der Anmeldung: 22.06.2016
(73) Patentinhaber: MTA Systems GmbH, 4320 Perg (AT)
(72) Erfinder: Feuerstein, Herwig, 4320 Perg (AT)
(74) Vertreter: Sonn & Partner Patentanwälte

(56) Entgegenhaltungen:
- EP-B1- 1 671 901
- AT-A1- 506 167
- AT-A4- 508 662
- DE-A1- 4 028 970
- DE-A1- 10 339 733
- DE-U1-202012 005 380
- GB-A- 293 319

## Beschreibung

Die Erfindung betrifft eine Antriebseinheit für eine Transportrolle, mit einem elektrischen Drehantrieb, der ein Statorelement insbesondere zur Montage an einem Gestellelement und ein Rotorelement zur Übertragung eines Drehmoments aufweist.

Weiters betrifft die Erfindung eine Transportrolle mit einem Rollenelement und mit einer Antriebseinheit. Schließlich bezieht sich die Erfindung auf eine Transportvorrichtung mit einer Transportrolle und mit einer Tragrolle, wobei die Transportrolle und die Tragrolle über ein Kraftübertragungselement, insbesondere ein Riemenelement, miteinander verbunden sind.

In der EP 1 671 901 B1 wird eine motorbetriebene Förderrolle für Förderanlagen beschrieben, welche zum Transport von Fördergut wie Behältern oder Paletten dient. Eine Rollenförderanlage weist eine Mehrzahl von Rollen auf, von denen zumindest einige angetrieben sind. Die Antriebseinheit einschließlich des elektrischen Motors ist dabei in den Rollenkörper integriert, welcher an einem Gestell drehbar gelagert wird. Die bekannte Förderrolle weist im Inneren des Rollenkörpers eine Antriebseinheit auf, deren Abtriebswelle mit einer Andruckeinheit verbunden ist. Die Andruckeinheit ist mit dem Innenumfang des Rollenkörpers in Umfangsrichtung kraftschlüssig verbunden. Die Andruckeinheit weist zwei Scheiben auf, die gemeinsam einen V-förmigen Umfang definieren, in welchen ein Anpressring aus einem elastischen Material gelegt ist. Bei der Montage der Förderrolle wird mittels einer Schraube der Anpressring komprimiert und radial nach außen gedrückt, so dass der Anpressring von innen umfänglich gegen das Innere des Rollenkörpers drückt. Dadurch wird die Drehbewegung der Abtriebswelle auf den Rollenkörper übertragen. Zur Kraftübertragung auf andere Rollen ist an dem Rollenkörper oder einer damit verbundenen Buchse außenumfänglich ein W-förmiges Umfangsprofil ausgebildet, um welches ein sogenannter Poly-V-Riemen gelegt wird. Bei der bekannten Ausführung ist die Buchse mit dem W-förmigen Umfangsprofil am einen Ende und die Antriebseinheit mit der Andrückeinheit am anderen Ende des Rollenkörpers angeordnet.

Der Nachteil des Standes der Technik besteht jedoch darin, dass die Kraftübertragung mittels der Andrückeinheit im Dauereinsatz unzuverlässig ist, da sich der Reibschluss über die Zeit verändern kann. Darüber hinaus ist nachteilig, dass die fixe axiale Position der Andrückeinheit eine ungünstige Auswirkung auf die Lagerung der Getriebeabtriebswelle hat, indem die fixe Position der Andrückeinheit als zusätzliches Festlager ausgebildet ist.

Eine motorbetriebene Förderrolle ist beispielsweise aus der DE 20 2012 005 380 U1 bekannt, wobei eine Antriebseinheit im Innenraum eines Rollenkörpers angeordnet ist. Zur Übertragung eines Drehmoments von der Antriebseinheit auf den Rollenkörper ist eine Kupplungseinheit vorgesehen. Bei diesem Stand der Technik ist ein Planetengetriebe vorgesehen, welches eine mit einem Sechskantquerschnitt ausgeführte Abtriebswelle aufweist, die formschlüssig mit der Kupplungseinheit drehmomentfest verbunden ist. Die Kupplungseinheit ist mittels eines Anpressringes reibschlüssig an der Innenwand des Rollenkörpers festgesetzt und überträgt das Drehmoment der Antriebseinheit und die Rotation der Abtriebswelle auf den Rollenkörper. Der Rollenkörper dreht sich in Folge dessen mit dem Antriebsdrehmoment relativ zu dem Lagerzapfen und der Antriebseinheit. Die DE 20 2012 005 380 U1offenbart den Oberbegriff des Anspruchs 1.

Die AT 506 167 A1 offenbart eine Rollenbahn mit an einem Rollengerüst nacheinander angeordneten und drehbar gelagerten Rollen zum Transport von Fördergütern. Zum Antrieb der Rollen ist ein Elektromotor vorgesehen, wobei der Rotor des Elektromotors mit der jeweiligen anzutreibenden Rolle verbunden ist und der Stator des Elektromotors koaxial zu dieser Rolle angeordnet ist.

Aus der DE 103 39 733 A1 ist ein Antrieb für eine Walze bekannt, wobei der Antrieb direkt mit dem Rotor eines Elektromotors mechanisch starr verbunden ist und der Stator des Elektromotors mechanisch elastisch mit einem Maschinenbett oder einem Walzengestell der Maschine verbunden ist.

Die GB 293 319 beschreibt eine Transportrolle mit einer stationären Achse, an welcher ein Stator eines zum Antrieb der Transportrolle vorgesehenen Motors angeordnet ist. Der Rotor des Motors ist derart ausgestaltet, dass er im Betriebszustand der Transportrolle um den Stator rotiert und mit der Transportrolle fest verbunden ist, so dass ein Drehmoment direkt von dem Motor auf die Transportrolle übertragen wird.

Aus der AT 508 662 A4 ist eine Förderanlage zum Fördern von Fördergut bekannt, welche einen innerhalb einer Förderrolle angeordneten Antriebsmotor aufweist. Der Antriebsmotor ist durch einen Gleichstrommotor gebildet, welcher einen auf der Rollenachse befestigten Stator und einen um diesen angeordneten Rotor umfasst. Der Rotor ist als Außenläufer ausgestaltet und weist Permanentmagnete auf, welche mit dem Rohrkörper verbunden sind.

Die DE 40 28 970 A1 offenbart eine Transportrolle mit einem zylindrischen Rollenkörper, in dessen Enden zwei Führungsteile in Form von Kunststoffeinsätzen angeordnet sind. Einer der beiden Einsätze weist eine glatte Innenfläche auf. Der andere Einsatz weist ein Profil auf. In diese Einsätze werden Führungskörper eingeführt, welche über eine Achse miteinander verbunden sind. Ein Führungskörper wird passiv zur Führung des Rollenkörpers eingesetzt. Der andere Führungskörper ist zum Antrieb der Transportrolle ausgebildet. Zu diesem Zweck weist der Führungskörper ein Profil auf, welches in das komplementär ausgebildete Profil innerhalb des Kunststoffeinsatzes formschlüssig eingreifen kann.

Demnach besteht die Aufgabe der vorliegenden Erfindung darin, die Nachteile des Standes der Technik zu beseitigen bzw. zu lindern. Die Erfindung setzt sich daher insbesondere zum Ziel, eine konstruktiv einfache, günstig herzustellende Antriebseinheit sowie eine damit ausgestattete Transportrolle zu schaffen, mit welcher die Übertragung des Drehmomentes möglichst verlustfrei und im Dauereinsatz zuverlässig bewerkstelligt wird. Die Antriebseinheit bzw. die Transportrolle soll dabei insbesondere bei unterschiedlichen Umgebungsbedingungen, wie beispielweise auch in einer Tiefkühlumgebung oder bei erhöhten Temperaturen, die Betriebssicherheit gewährleisten.

Diese Aufgabe wird durch eine Antriebseinheit mit den Merkmalen von Anspruch 1, eine Transportrolle mit den Merkmalen von Anspruch 4 und eine Transportvorrichtung mit den Merkmalen von Anspruch 6 gelöst. Bevorzugte Ausführungen sind in den abhängigen Ansprüchen angegeben.

Erfindungsgemäß ist das Rotorelement des Drehantriebs über eine drehfeste Verbindung mit einem Kopplungselement verbunden, welches an einer Mantelfläche zumindest eine Vertiefung zur Aufnahme eines Kraftübertragungselements, insbesondere eines Riemenelements, zur Kraftübertragung auf eine Tragrolle aufweist.

Bei der erfindungsgemäßen Ausführung ist daher das Rotorelement drehfest mit einem Kopplungselement verbunden, welches am Außenumfang die Vertiefung zur Anbringung des Kraftübertragungselements aufweist. Demnach wird die Drehbewegung des Rotorelements direkt auf das Kopplungselement übertragen, mit welchem der Übertrieb auf passive, d.h. angetriebene, Tragrollen bewerkstelligt wird. Diese Ausführung bringt den Vorteil mit sich, dass die Kraftübertragung im Dauereinsatz besonders zuverlässig und im Wesentlichen verlustfrei ist. Zudem kann eine besonders kompakte Bauweise erzielt werden. Weiters ist die erfindungsgemäße Konstruktion wenig störanfällig, indem das Rotorelement direkt mit dem Kopplungs- bzw. Übertriebselement verbunden ist. Als Kraftübertragungselement können verschiedene Riemenelemente, beispielsweise Keilrippenriemen, Zahnriemen, Flachriemen oder Rundriemen, verwendet werden, welche um entsprechend geformte Vertiefungen am vorzugsweise im Wesentlichen zylindrischen Außenumfang des Kopplungselements geschlungen werden.

Um die Drehbewegung des Rotorelements auf das Kopplungselement zu übertragen, weist das Kopplungselement und das Rotorelement ineinander greifende Verbindungselemente zur drehfesten Verbindung zwischen dem Kopplungselement und dem Rotorelement auf. Bei dieser Ausführung ist eine formschlüssige Verbindung zwischen dem Kopplungselement und dem Rotorelement vorgesehen. Die Drehbewegung des Rotorelements wird über die formschlüssige Verbindung auf das Kopplungselement übertragen, welches dadurch in Drehbewegung versetzt wird. Die Drehbewegung des Kopplungselements wird über das Kraftübertragungselement auf eine Tragrolle übertragen, welche selbst keine Antriebseinheit aufweist und daher von der Transportrolle angetrieben wird. Das Rotorelement der Antriebseinheit kann im montierten Betriebszustand innerhalb eines im Wesentlichen zylindrischen Rollenelementes angeordnet sein, welches vorzugsweise durch das damit drehfest verbundene Kopplungselement in Drehbewegung versetzt wird. Diese Ausführung zeichnet sich durch eine geringe Störanfälligkeit aus, da die formschlüssige Kraftübertragung zwischen dem Rotor- und dem Kopplungselement über lange Betriebsdauern im Wesentlichen verlustfrei aufrechterhalten werden kann. Durch die formschlüssige Verbindung, welche vorzugsweise im Wesentlichen spielfrei ausgeführt ist, kann selbst bei einer hohen Anzahl von Starts bzw. Stopps eine äußerst robuste und sichere Art der Übertragung der Drehmomente gewährleistet werden.

Die Verbindungselemente sind an einander zugewandten Stirnseiten des Kopplungselements bzw. des Rotorelements angeordnet. Diese Ausführung hat den Vorteil, dass die Kraftübertragung auf das Rotorelement besonders zuverlässig gewährleistet wird. Weiters ist vorteilhaft, dass die Verbindungselemente an den Stirnseiten des Kopplungs- bzw. Rotorelements den Innenraum des Rotorelements im Wesentlichen nicht reduzieren. Dadurch kann das für den Einbau von Komponenten in das Rotorelement zur Verfügung stehende Einbauvolumen erhöht werden.

Zur formschlüssigen Verbindung zwischen dem Rotorelement und dem Kopplungselement sind als Verbindungselemente zwischen dem Kopplungselement und dem Rotorelement in axialer Richtung erstreckte, seitlich aneinander anliegende Verbindungsvorsprünge vorgesehen. Demnach erstrecken sich die Verbindungsvorsprünge in axialer Richtung des Rotorelements bzw. des Kopplungselements, welche vorzugsweise jeweils im Wesentlichen zylindrisch ausgebildet sind. Die Verbindungsvorsprünge sind in radialer Richtung des Rotor- bzw. Kopplungselements überlappend, insbesondere im Wesentlichen nebeneinander, angeordnet, so dass die Drehbewegung des Rotorelements über die Verbindungsvorsprünge auf das Kopplungselement übertragen wird.

Um die Übertragung des Drehmoments von dem Rotorelement auf das Kopplungselement besonders zuverlässig zu gestalten, weist das Kopplungselement und das Rotorelement an den Stirnseiten jeweils mehrere, in Umfangsrichtung beabstandete Verbindungsvorsprünge auf. Bei diesen Ausführungen bilden die Verbindungsvorsprünge an Rotor- und Kopplungselement eine Verzahnung, welche für einen sicheren Formschluss zwischen dem Kopplungselement und dem Rotorelement sorgt.

Gemäß einer bevorzugten Ausführung nimmt der Querschnitt zumindest eines Verbindungsvorsprungs am Rotorelement oder am Kopplungselement in axialer Richtung zu dessen freiem Ende hin ab. Diese Ausführung ermöglicht durch die axiale Ausrichtung der Verbindung des Rotorelements mit dem Kopplungselement eine absolut spielfreie Verbindung.

Zur Erzielung einer Schwalbenschwanzverbindung zwischen dem Kopplungselement und dem Rotorelement ist es günstig, wenn die umfangseitige Erstreckung zumindest eines Verbindungsvorsprungs am Rotorelement oder am Kopplungselement in radialer Richtung nach außen zunimmt. Diese Ausführung hat den Vorteil, dass der Formschluss zwischen dem Rotor- und Kopplungselement nicht nur in Umfangsrichtung, sondern auch in radialer Richtung wirkt.

Als elektrischer Drehantrieb ist ein Außenläufermotor mit einem das Rotorelement bildenden Außenläuferelement vorgesehen. Diese Ausführung hat insbesondere den Vorteil, dass die Antriebseinheit ohne Getriebe auskommen kann. Im angetriebenen Zustand wird das Drehmoment des Außenläuferelements auf das Kopplungselement übertragen, welches vorzugsweise über die ineinander greifenden Verbindungselemente drehfest mit dem Rotorelement verbunden ist. Bei einer alternativen, weniger bevorzugten Ausführung ist zwischen dem Außenläuferelement und dem Rotorelement ein Getriebe angeordnet.

Gemäß einer alternativen Ausführungsvariante der Antriebseinheit ist als elektrischer Drehantrieb ein Innenläufermotor vorgesehen, welcher eine mit dem Rotorelement drehfest verbundene Abtriebswelle aufweist. Der Innenläufermotor kann ein Getriebe aufweisen.

Bei einer bevorzugten Ausführung der Transportrolle ist das Rotorelement der Antriebseinheit innerhalb des Rollenelements der Transportrolle und die Mantelfläche des Kopplungselements der Antriebseinheit außerhalb des Rollenelements der Transportrolle angeordnet. Bei dieser Ausführung ist bevorzugt vorgesehen, dass das Kopplungselement über eine drehfeste Verbindung mit dem Rollenelement verbunden ist. Dadurch kann die Drehbewegung des Rotorelements auf das Rollenelement übertragen werden. Zur Ausbildung der drehfesten Verbindung kann das Rollenelement im Presssitz auf einem Befestigungsabschnitt des Kopplungselements angeordnet sein. Alternativ kann eine formschlüssige Verbindung zwischen dem Kopplungselement und dem Rollenelement vorgesehen sein. Die formschlüssige Verbindung kann durch ineinander greifende Verbindungsvorsprünge, entsprechend der bevorzugten Ausführung der Verbindung zwischen dem Rotorelement der Antriebseinheit und dem Kopplungselement, ausgebildet sein. Bei diesen Ausführungen kann vorteilhafterweise auf eine drehfeste Verbindung zwischen der Antriebseinheit und dem Rollenelement verzichtet werden. In manchen Fällen ist es allerdings günstig, wenn zwischen der Antriebseinheit und dem Rollenelement eine Einrichtung zur axialen Zentrierung des Rollenelements vorgesehen ist. Diese Einrichtung weist vorzugsweise zumindest eine in Umfangsrichtung verlaufende Rille am Rotorelement der Antriebseinheit auf, in welche ein entsprechender Ring aus elastisch verformbarem Material, beispielsweise Gummi, oder ein Federring anordenbar ist. Diese Zentriereinrichtung ist jedoch nicht zur Übertragung eines Drehmoments auf das Rollenelement eingerichtet, welches ausschließlich durch die drehfeste Verbindung zwischen dem Kopplungselement und dem Rollenelement in Drehbewegung versetzt wird.

Um die Transportrolle für den Transport von Transportgut verwenden zu können, ist es günstig, wenn die Mantelfläche des Rollenelements als Transportfläche für Transportgut ausgebildet ist. Bei dieser Ausführung ist die Mantelfläche des Rollenelements im Betriebszustand an der Transportebene angeordnet, welche vorzugsweise durch mehrere Rollen gebildet ist. Die Transportrolle kann im Inneren des Kopplungselements eine Drehlagereinrichtung aufweisen, welche ein mit dem Kopplungselement verbundenes Lagerelement und ein mit dem Gestellelement verbundenes Lagerelement aufweist. Eine entsprechende Drehlagereinrichtung kann im Inneren des Rollenelements auf der dem Kopplungselement gegenüberliegenden Stirnseite der Transportrolle vorgesehen sein, um eine drehbare Montage auf einem weiteren ortsfesten Gestellelement zu ermöglichen.

Gemäß einer bevorzugten Ausführung einer Transportvorrichtung mit zumindest einer Transport- und einer Tragrolle ist die Mantelfläche der Tragrolle als Transportfläche für Transportgut ausgebildet, wobei die Transportrolle im montierten Betriebszustand gegenüber der Tragrolle in vertikaler Richtung nach unten versetzt angeordnet ist. Bei dieser Ausführung wird das Transportgut über die Mantelfläche der Tragrolle transportiert, welche von der Transportrolle angetrieben wird. Die Transportrolle selbst ist unterhalb der Transportstrecke angeordnet, so dass die Transportrolle als externer Antrieb für die Tragrolle fungiert.

Zur Erzielung einer konstruktiv einfachen Ausführung mit geringen Investitions- und Montageaufwand ist es günstig, wenn eine weitere Tragrolle vorgesehen ist, deren Mantelfläche als Auflagefläche für Transportgut ausgebildet ist, wobei das Kopplungselement der Transportrolle über je ein

Kraftübertragungselement mit der Tragrolle und der weiteren Tragrolle verbunden ist. Demnach kann dieselbe Transportrolle für den Antrieb von zumindest zwei Tragrollen genutzt werden, wobei die Kraftübertragungselemente über dasselbe Kopplungselement der Transportrolle ablaufen.

Zur Ausbildung einer längeren Transportstrecke ist es günstig, wenn mehrere Transportrollen vorgesehen sind, welche über je ein Kraftübertragungselement mit einer Tragrolle und einer weiteren Tragrolle verbunden sind.

Die Erfindung wird nachstehend von in den Zeichnungen dargestellten Ausführungsbeispielen, auf die sie jedoch nicht beschränkt sein soll, noch weiter erläutert. Im Einzelnen zeigt:
Fig. 1 eine schaubildliche Ansicht einer erfindungsgemäßen Antriebseinheit zum Antrieb einer Transportrolle;
Fig. 2 eine Seitenansicht der Antriebseinheit gemäß Fig. 1;
Fig. 3 eine Schnittansicht entlang der Linie III-III in Fig. 3;
Fig. 4 eine Ansicht eines Rotorelements der Antriebseinheit gemäß Fig. 1 bis 3, welches an der Stirnseite Verbindungsvorsprünge zur formschlüssigen Verbindung mit einem Kopplungselement der Antriebseinheit aufweist;
Fig. 5 eine Schnittansicht entlang der Linie V-V in Fig. 4;
Fig. 6 eine Ansicht einer weiteren erfindungsgemäßen Ausführungsform des Rotorelements der Antriebseinheit;
Fig. 7 eine Schnittansicht entlang der Linie VII-VII in Fig. 6;
Fig. 8 eine Ansicht einer weiteren erfindungsgemäßen Ausführungsform des Rotorelements der Antriebseinheit;
Fig. 9 eine Detailansicht des in Fig. 8 mit einem Pfeil veranschaulichten Details A;
Fig. 10 eine Seitenansicht einer erfindungsgemäßen Transportrolle, welche mit der Antriebseinheit gemäß Fig. 1 bis 3 ausgestattet ist;
Fig. 11 eine Schnittansicht entlang der Linie XI-XI in Fig. 10;
Fig. 12 eine schaubildliche Ansicht einer erfindungsgemäßen Transporteinrichtung mit zwei Transportrollen gemäß Fig. 5, welche jeweils zwei passive Tragrollen antreiben;
Fig. 13 in Draufsicht eine alternative erfindungsgemäße Ausführungsform der Transporteinrichtung, bei welcher die Transportrollen unterhalb der Transportebene angeordnet sind;
Fig. 14 eine Schnittansicht entlang der Linie XIV-XIV in Fig. 13;
Fig. 15 eine schaubildliche Ansicht der Transporteinrichtung gemäß Fig. 13, 14; und
Fig. 16 einen Längsschnitt durch eine Transportrolle gemäß einer alternativen erfindungsgemäßen Ausführung;

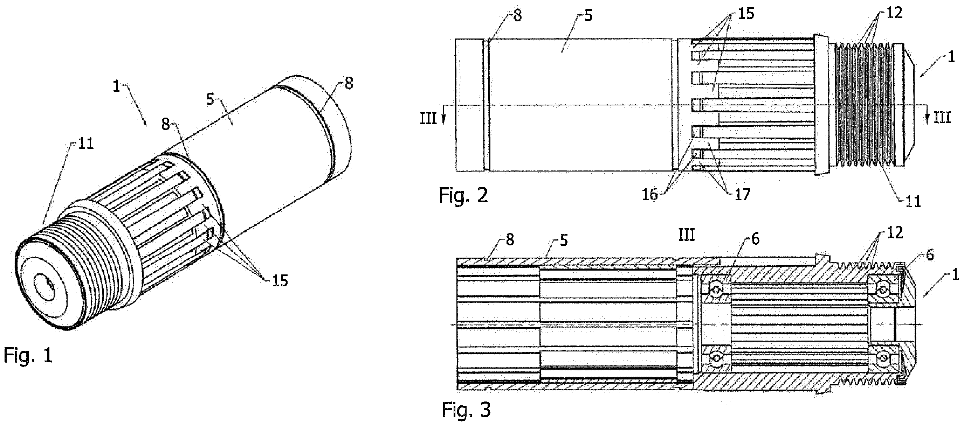

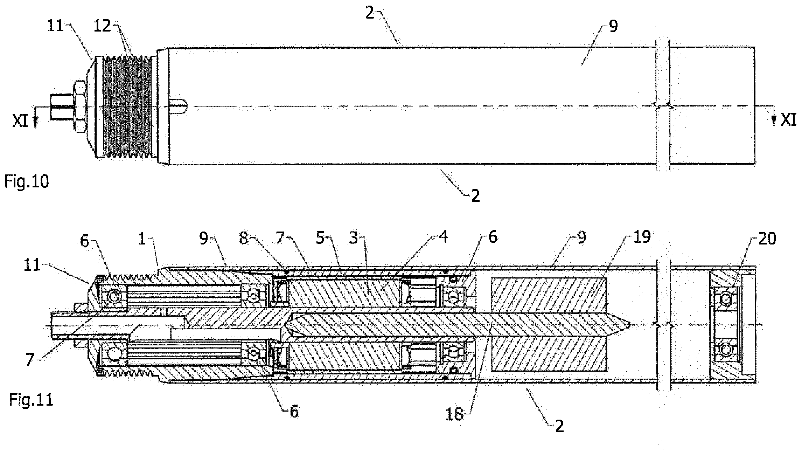

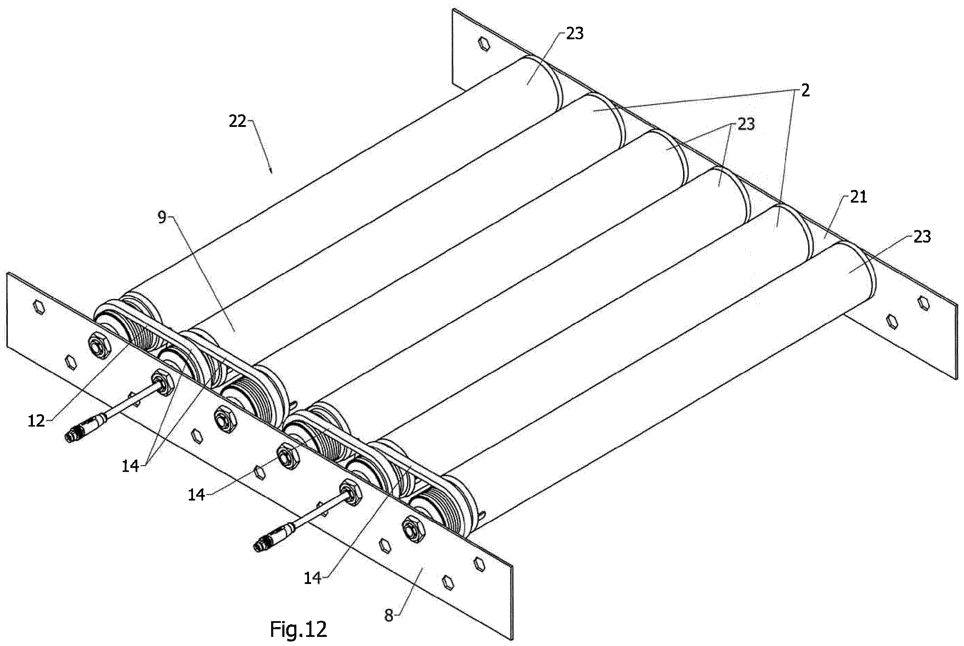

In den Fig. 1 bis 3 sind Teile einer Antriebseinheit 1 zum Einbau in eine Transportrolle 2 ersichtlich, welche in den Fig. 10, 11 dargestellt ist. Die Antriebseinheit 1 weist einen in Fig. 10, 11 ersichtlichen elektrischen Drehantrieb 3 auf, welcher ein Statorelement 4 zur ortsfesten Montage an einem Gestellelement 10 (vgl. Fig. 12 bis 14) und ein im Wesentlichen zylindrisches Rotorelement 5 zur Bereitstellung eines Drehmoments aufweist. Als elektrischer Drehantrieb 3 ist in der gezeigten Ausführung ein getriebeloser Außenläufermotor vorgesehen, welcher zur Ausbildung des Rotorelements 5 ein Außenläuferelement 7 aufweist. Das Rotorelement 5 weist an der Außenseite in Umfangsrichtung umlaufende Rillen 8 auf, in welche Gummiringe zur axialen Zentrierung eines Rollenelements 9 (vgl. Fig. 10, 11) aufgenommen sind. Die Antriebseinheit 1 ist im Inneren des Rollenelements 9 angeordnet. Weiters sind in den Figuren diverse Drehlagereinrichtungen 6 zwischen den rotierenden und den ortsfesten Komponenten ersichtlich.

Wie aus Fig. 1 bis 3 weiters ersichtlich, ist das Rotorelement 5, hier das Außenläuferelement 7, drehfest mit einem Kopplungselement 11 verbunden. Das Kopplungselement 11 weist an der Mantelfläche, d.h. am Außenumfang, mehrere in Umfangsrichtung umlaufende Vertiefungen 12 auf, in welche ein entsprechend geformtes Kraftübertragungselement 13 (vgl. Fig. 12 bis 14) eingelegt werden kann. Die gezeigte Ausführung des Kopplungselements 11 ist für die Aufnahme eines Riemenelements 14 eingerichtet; bei einer nicht gezeigten Ausführung kann jedoch auch ein Ketten- oder Zahnriemenübertrieb vorgesehen sein. Die Vertiefungen 12 am Kopplungselement 11 können unterschiedlich ausgebildet sein. In der gezeigten Ausführung sind die Vertiefungen 12 im Querschnitt im Wesentlichen V-förmig, um einen entsprechenden Keilrippenriemen aufzunehmen. Entsprechend können jedoch auch Flachriemen, Zahnriemen oder Rundriemen verwendet werden, wobei die Vertiefungen 12 am Kopplungs- oder Übertriebselements 11 entsprechend auszubilden sind. Mit Hilfe des Kopplungselements 11 kann die Drehbewegung der Antriebseinheit 1 auf eine passive bzw. angetriebene Tragrolle 23 (vgl. Fig. 12 bis 14) übertragen werden. Das Rollenelement 9 ist in der gezeigten Ausführung auf einen Befestigungsabschnitt des Kopplungselements 11 aufgesteckt, so dass die Drehbewegung des Kopplungselements 11 auf das Rollenelement 9 übertragen wird. Zwischen dem Außenumfang des Rotorelements 5 des Drehantriebs 3 und dem Innenumfang des Rollenelements 9 kann ein schmaler Spalt ausgebildet sein, so dass die Antriebseinheit 1 im Wesentlichen berührungsfrei zu dem Rollenelement 9 angeordnet wird.

Wie aus Fig. 1 bis 3 weiters ersichtlich, weisen das Kopplungselement 11 und das Rotorelement 5 ineinander greifende, d.h. formschlüssig miteinander verbundene, Verbindungselemente 15 auf, mit welchen eine drehfeste Verbindung zwischen dem Rotorelement 5 und dem Kopplungselement 11 hergestellt wird. Die Verbindungselemente 15 sind in der gezeigten Ausführungsform einteilig mit einander zugewandten Stirnseiten des Kopplungselements 11 bzw. des Rotorelements 5 ausgebildet. Als Verbindungselemente 15 zwischen dem Kopplungselement 11 und dem Rotorelement 5 sind in der gezeigten Ausführung einerseits Verbindungsvorsprünge 16 des Kopplungselements 11 und andererseits Verbindungsvorsprünge 17 des Rotorelements 5 vorgesehen. Die Verbindungsvorsprünge 16, 17 sind in axialer Richtung des Kopplungs- 11 bzw. Rotorelements 5 erstreckt, wobei die Verbindungsvorsprünge 16, 17 zur Kraftübertragung in Umfangsrichtung seitlich aneinander anliegen. In der gezeigten Ausführung weisen das Kopplungselement 11 und das Rotorelement 5 jeweils einige Verbindungsvorsprünge 16, 17 auf, welche in regelmäßigen Abständen in Umfangsrichtung an den Stirnseiten des Kopplungs- 11 bzw. Rotorelements 5 angeordnet sind. Zwischen den Verbindungsvorsprüngen 17 des Rotorelements 5 sind Ausnehmungen für die Anordnung der Verbindungsvorsprünge 16 des Kopplungselements 11 gebildet.

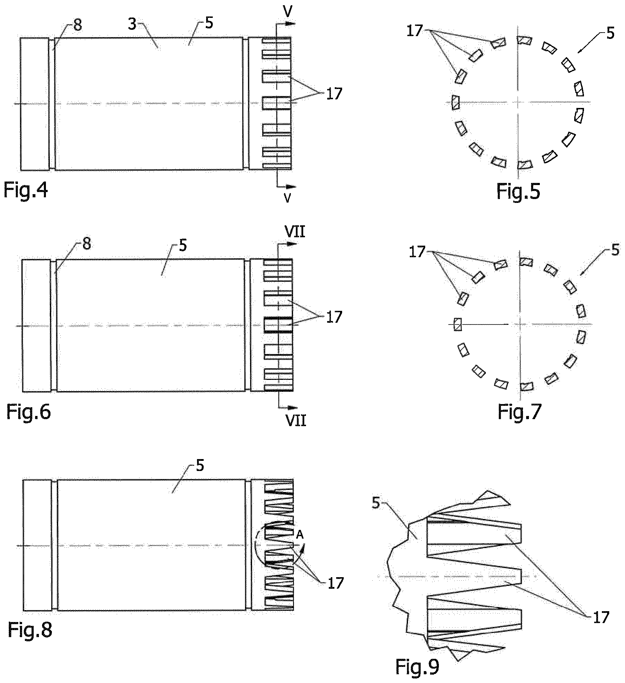

In den Fig. 4 bis 9 sind verschiedene Ausführungen des Rotorelements 5 gezeigt, welche sich in der Form der Verbindungsvorsprünge 17 des Rotorelements 5 unterscheiden.

Gemäß Fig. 4, 5 weisen die Verbindungsvorsprünge 17 des Rotorelements 5 einen in axialer Richtung konstanten Querschnitt auf. Darüber hinaus nimmt die Breite der Verbindungsvorsprünge 17 des Rotorelements 5, d.h. deren Erstreckung in Umfangsrichtung des Rotorelements 5, bei dieser Ausführung in radialer Richtung nach außen zu, wodurch eine Hinterschneidung in der Art einer Schwalbenschwanzverbindung gebildet wird.

Gemäß Fig. 6, 7 ist die Breite der Verbindungsvorsprünge 17 des Rotorelements 5 im Querschnitt im Wesentlichen konstant. Sowohl bei der Ausführung der Fig. 4, 5 als auch bei der Ausführung der Fig. 6, 7 ist die Querschnittsfläche in axialer Richtung zum freien Ende hin, d.h. auf Seite des Kopplungselements 11, im Wesentlichen konstant.

Gemäß Fig. 8, 9 laufen die Verbindungsvorsprünge 17 des Rotorelements 5 in axialer Richtung zu deren freiem Ende hin zusammen.

In den Fig. 10, 11 ist die Transportrolle 2 gezeigt, welche mit der zuvor beschriebenen Antriebseinheit 1 ausgestattet ist. Das Rotorelement 5 der Antriebseinheit 1 befindet sich dabei innerhalb des Rollenelements 9 der Transportrolle 2, wobei die Mantelfläche des Kopplungselements 11 der Antriebseinheit 1 außerhalb des Rollenelements 9 der Transportrolle 2 angeordnet ist, damit das Kraftübertragungs- bzw. Übertriebselement 13 um das Kopplungselement 11 geschlungen werden kann. Wie aus der Zeichnung ersichtlich, weist die Antriebseinheit 1 zudem ein Wärmeleitrohr 18 auf, welches mit einem Kühlkörper 19 verbunden ist. Die Transportrolle 2 weist zudem auf der dem Kopplungselement 11 gegenüberliegenden Seite eine weitere Drehlagereinrichtung 20 auf, mit welcher die Transportrolle 2 drehbar an einem weiteren ortsfesten Gestellelement 21 gelagert ist.

In Fig. 12 ist eine Ausführungsform einer Transportvorrichtung 22 gezeigt, welche mehrere, hier zwei, Transportrollen 2 gemäß den Fig. 10, 11 aufweist. Die Transportrollen 2 sind jeweils mit zwei oder mehr Tragrollen 23 verbunden. Zum Antrieb der Tragrollen 23 ist jede Transportrolle an dem Kopplungselement 11 mit zwei Kraftübertragungselementen 13 verbunden, welche jeweils eine benachbarte Tragrolle 23 antreiben. Zu diesem Zweck sind die Tragrollen 23 mit entsprechenden Kopplungselementen 11 ausgestattet, welche Ausnehmungen für die Kraftübertragungselemente 13 aufweisen. In der Ausführung der Fig. 12 sind die Transportrollen 2 in derselben waagrechten Ebene wie die Tragrollen 23 angeordnet, so dass die Mantelflächen der Rollenelemente 9 der Transportrollen 2 als Transportflächen für Transportgut ausgebildet sind.

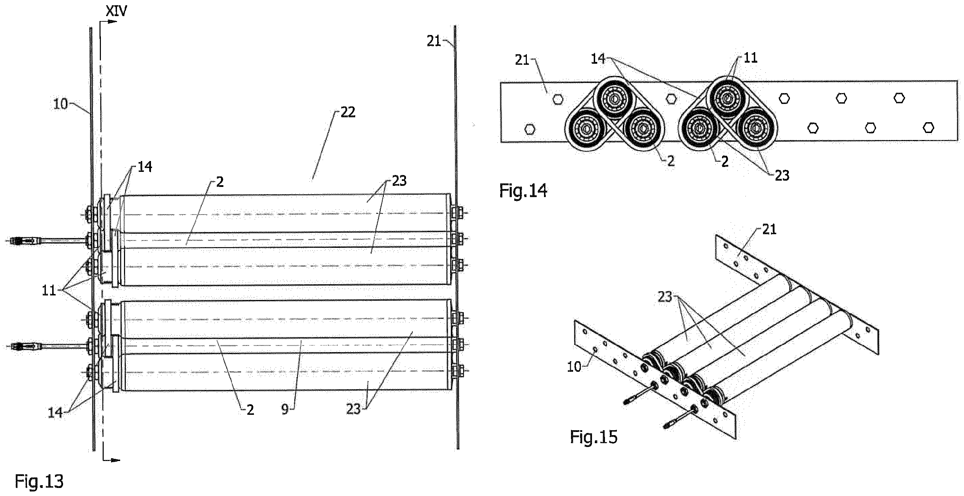

In den Fig. 13 bis 15 ist eine alternative Ausführung der Transportvorrichtung 22 gezeigt, bei welcher lediglich die Mantelflächen der Tragrollen 23 zum Transport von Transportgut herangezogen werden. Zu diesem Zweck sind die Transportrollen 2 im montierten Betriebszustand gegenüber den Tragrollen 23 in vertikaler Richtung weiter unten angeordnet. In der gezeigten Ausführung sind die Transportrollen 2 und die Tragrollen 23 in vertikaler Richtung überlappend angeordnet. Jede Transportrolle 2 treibt über dasselbe Kopplungselement 11 zwei Tragrollen 23 an. Je nach Ausführung kann dieselbe Transportrolle auch mehr als zwei Tragrollen 23 antreiben.

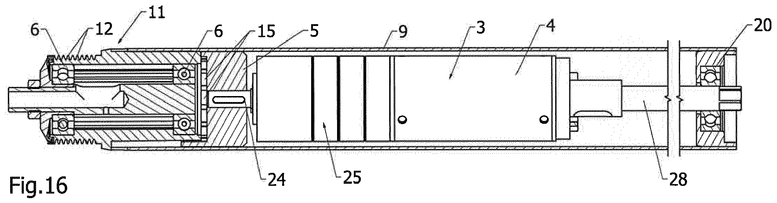

Fig. 16 zeigt eine alternative Ausführung der Transportrolle 2, bei welcher der Drehantrieb 3 eine Abtriebswelle 24 aufweist, welche drehfest mit dem Rotorelement 5 verbunden ist. Darüber hinaus weist die Antriebseinheit 1 in der gezeigten Ausführung ein Getriebe 25 zwischen der Abtriebswelle 24 und dem Antrieb auf. In einer alternativen Ausführung (nicht gezeigt) ist das Getriebe 25 nicht vorhanden. Das Rotorelement 5 ist, wie bei der Ausführung der Transportrolle 2 gemäß Fig. 1 bis 15, über ineinander greifende Verbindungsvorsprünge 15 mit dem Kopplungselement 11 verbunden. Diese formschlüssige Verbindung kann wie bei der zuvor beschriebenen Ausführungsvariante gemäß Fig. 1 bis 15 ausgebildet sein. Das Kopplungselement 11 weist am Außenumfang entsprechende Vertiefungen 12 zur Anordnung eines Riemenelements 14 auf. Das Statorelement 4 ist über eine Lagerwelle 26 mit dem Gestellelement 21 verbunden. Das Rollenelement 9 ist in der gezeigten Ausführung, wie bei der Ausführung der Fig. 1 bis 15, mit dem Kopplungselement 11 drehfest verbunden, so dass die Drehbewegung des Kopplungselements 11 auf das Rollenelement 9 übertragbar ist.

## Patentansprüche

1. Antriebseinheit (1) für eine Transportrolle (2), mit einem elektrischen Drehantrieb (3), der ein Statorelement (4) insbesondere zur Montage an einem Gestellelement (10, 21) und ein Rotorelement (5) zur Übertragung eines Drehmoments aufweist, wobei das Rotorelement (5) des Drehantriebs (3) über eine drehfeste Verbindung mit einem Kopplungselement (11) verbunden ist, welches an einer Mantelfläche zumindest eine Vertiefung (12) zur Aufnahme eines Kraftübertragungselements (13), insbesondere eines Riemenelements (14), zur Kraftübertragung auf eine Tragrolle (23) aufweist, wobei das Kopplungselement (1 1) und das Rotorelement (5) ineinander greifende Verbindungselemente (15) zur drehfesten Verbindung zwischen dem Kopplungselement (11) und dem Rotorelement (5) aufweisen und als Verbindungselemente (15) zwischen dem Kopplungselement (11) und dem Rotorelement (5) in axialer Richtung erstreckte, seitlich aneinander anliegende Verbindungsvorsprünge (16, 17) vorgesehen sind, wobei als elektrischer Drehantrieb (3) ein Außenläufermotor mit einem das Rotorelement (5) bildenden Außenläuferelement (7) vorgesehen ist, **dadurch gekennzeichnet, dass** die Verbindungselemente (15) an einander zugewandten Stirnseiten des Kopplungselements (11) und des Rotorelementes (5) anqeordnet sind und dass das Kopplunqselement (11) und das Rotorelement (5) an den Stirnseiten jeweils mehrere in Umfangsrichtung beabstandete Verbindungsvorsprünge (16, 17) aufweisen.

2. Antriebseinheit (1) nach Anspruch 1, **dadurch gekennzeichnet, dass** der Querschnitt zumindest eines Verbindungsvorsprungs (16, 17) am Rotorelement (5) oder am Kopplungselement (11) in axialer Richtung zu dessen freiem Ende hin abnimmt.

3. Antriebseinheit (1) nach Anspruch 1 oder 2, **dadurch gekennzeichnet, dass** die umfangseitige Erstreckung zumindest eines Verbindungsvorsprungs (16, 17) am Rotorelement (5) oder am Kopplungselement (11) in radialer Richtung nach außen zunimmt.

4. Transportrolle (2) mit einer Antriebseinheit (1) und mit einem Rollenelement (9), **dadurch gekennzeichnet, dass** die Antriebseinheit (1) nach einem der Ansprüche 1 bis 3 ausgebildet ist, wobei das Rotorelement (5) der Antriebseinheit (1) innerhalb des Rollenelements (9) der Transportrolle (2) und die Mantelfläche des Kopplungselements (11) der Antriebseinheit (1) außerhalb des Rollenelements (9) der Transportrolle (2) angeordnet ist.

5. Transportrolle (2) nach Anspruch 4, **dadurch gekennzeichnet, dass** die Mantelfläche des Rollenelements (9) als Transportfläche für Transportgut ausgebildet ist.

6. Transportvorrichtung (22) mit einer Transportrolle (2) und mit einer Tragrolle (23), wobei die Transportrolle (2) und die Tragrolle (23) über ein Kraftübertragungselement (13), insbesondere ein Riemenelement (14), miteinander verbunden sind, **dadurch gekennzeichnet, dass** die Transportrolle (2) nach Anspruch 4 oder Anspruch 5 ausgebildet ist.

7. Transportvorrichtung (22) nach Anspruch 6, **dadurch gekennzeichnet, dass** die Mantelfläche der Tragrolle (23) als Transportfläche für Transportgut ausgebildet ist, wobei die Transportrolle (2) im montierten Betriebszustand gegenüber der Tragrolle (23) in vertikaler Richtung nach unten versetzt angeordnet ist.

8. Transportvorrichtung (22) nach Anspruch 6 oder 7, **dadurch gekennzeichnet, dass** eine weitere Tragrolle (23) vorgesehen ist, deren Mantelfläche als Auflagefläche für Transportgut ausgebildet ist, wobei das Kopplungselement (11) der Transportrolle (2) über je ein Kraftübertragungselement (13) mit der Tragrolle (23) und der weiteren Tragrolle (23) verbunden ist.

9. Transportvorrichtung (22) nach Anspruch 8, **dadurch gekennzeichnet, dass** mehrere Transportrollen (2) nach Anspruch 6 oder 7 vorgesehen sind, welche über je ein Kraftübertragungselement (13) mit einer Tragrolle (23) und einer weiteren Tragrolle (23) verbunden sind.

## Claims

1. Drive unit (1) for a conveyor roller (2), comprising an electric rotary drive (3) that has a stator element (4), in particular for assembly on a frame element (10, 21), and a rotor element (5) for transmitting torque, the rotor element (5) of the rotary drive (3) being connected, by means of a rotationally fixed connection, to a coupling element (11), a lateral surface of which comprises at least one recess (12) for receiving a force-transmitting element (13), in particular a belt element (14), for transmitting force to an idler roller (23), the coupling element (11) and the rotor element (5) comprising mutually engaging connection elements (15) for connecting the coupling element (11) and the rotor element (5) for conjoint rotation and connecting projections (16, 17) that extend in the axial direction and are laterally adjacent being provided as connection elements (15) between the coupling element (11) and the rotor element (5), an external rotor motor having an external rotor element (7) forming the rotor element (5) being provided as the electric rotary drive (3), **characterised in that** the connection elements (15) are arranged on mutually facing end faces of the coupling element (11) and the rotor element (5) and **in that** the end faces of the coupling element (11) and the rotor element (5) each comprise a plurality of connecting projections (16, 17) that are spaced apart in the circumferential direction.

2. Drive unit (1) according to claim 1, **characterised in that** the cross section of at least one connecting projection (16, 17) on the rotor element (5) or on the coupling element (11) decreases towards the free end thereof in the axial direction.

3. Drive unit (1) according to either claim 1 or claim 2, **characterised in that** the circumferential extension of at least one connecting projection (16, 17) on the rotor element (5) or on the coupling element (11) increases outwards in the radial direction.

4. Conveyor roller (2) comprising a drive unit (1) and a roller element (9), **characterised in that** the drive unit (1) is designed according to any of claims 1 to 3, the rotor element (5) of the drive unit (1) being arranged inside the roller element (9) of the conveyor roller (2) and the lateral surface of the coupling element (11) of the drive unit (1) being arranged outside the roller element (9) of the conveyor roller (2).

5. Conveyor roller (2) according to claim 4, **characterised in that** the lateral surface of the roller element (9) is designed as a conveying surface for goods to be conveyed.

6. Conveyor device (22) comprising a conveyor roller (2) and an idler roller (23), the conveyor roller (2) and the idler roller (23) being interconnected via a force-transmitting element (13), in particular a belt element (14), **characterised in that** the conveyor roller (2) is designed according to claim 4 or claim 5.

7. Conveyor device (22) according to claim 6, **characterised in that** the lateral surface of the idler roller (23) is designed as a conveying surface for goods to be conveyed, the conveyor roller (2) being arranged, in the assembled operating state, so as to be offset downwards in the vertical direction with respect to the idler roller (23).

8. Conveyor device (22) according to either claim 6 or claim 7, **characterised in that** an additional idler roller (23) is provided, the lateral surface of which is designed as a contact surface for goods to be conveyed, the coupling element (11) of the conveyor roller (2) being connected to the idler roller (23) and to the additional idler roller (23) via a force-transmitting element (13) in each case.

9. Conveyor device (22) according to claim 8, **characterised in that** a plurality of conveyor rollers (2) according to either claim 6 or claim 7 are provided which are connected to an idler roller (23) and to an additional idler roller (23) via a force-transmitting element (13) in each case.

## Revendications

1. Unité d'entraînement (1) pour un rouleau de transport (2), avec un entraînement rotatif (3) électrique qui comporte un élément de stator (4), en particulier pour le montage sur un élément de châssis (10, 21), et un élément de rotor (5) pour la transmission d'un couple, l'élément de rotor (5) de l'entraînement rotatif (3) étant, par le biais d'un raccordement solidaire en rotation, raccordé à un élément d'accouplement (11) qui comporte, sur une surface d'enveloppe, au moins un creux (12) destiné à recevoir un élément de transmission de force (13), en particulier un élément de courroie (14), pour la transmission de force à un rouleau porteur (23), l'élément d'accouplement (11) et l'élément de rotor (5) comportant des éléments de raccordement (15) engrenant les uns dans les autres pour le raccordement solidaire en rotation entre l'élément d'accouplement (11) et l'élément de rotor (5), et des saillies de raccordement (16, 17), s'étendant dans la direction axiale entre l'élément d'accouplement (11) et l'élément de rotor (5), adjacentes les unes aux autres latéralement, étant prévues en tant qu'éléments de raccordement (15), un moteur à rotor extérieur avec un élément de rotor extérieur (7) formant l'élément de rotor (5) étant prévu en tant qu'entraînement rotatif (3) électrique, **caractérisée en ce que** les éléments de raccordement (15) sont disposés sur des côtés frontaux, tournés les uns vers les autres, de l'élément d'accouplement (11) et de l'élément de rotor (5), et **en ce que** l'élément d'accouplement (11) et l'élément de rotor (5) comportent sur les côtés frontaux respectivement plusieurs saillies de raccordement (16, 17) espacées dans la direction circonférentielle.

2. Unité d'entraînement (1) selon la revendication 1, **caractérisée en ce que** la section transversale d'au moins une saillie de raccordement (16, 17) sur l'élément de rotor (5) ou sur l'élément d'accouplement (11) diminue vers son extrémité libre dans la direction axiale.

3. Unité d'entraînement (1) selon la revendication 1 ou 2, **caractérisée en ce que** l'extension côté circonférentiel d'au moins une saillie de raccordement (16, 17) sur l'élément de rotor (5) ou sur l'élément d'accouplement (11) augmente vers l'extérieur dans la direction radiale.

4. Rouleau de transport (2) avec une unité d'entraînement (1) et avec un élément de rouleau (9), **caractérisé en ce que** l'unité d'entraînement (1) est constituée selon l'une des revendications 1 à 3, l'élément de rotor (5) de l'unité d'entraînement (1) étant disposé à l'intérieur de l'élément de rouleau (9) du rouleau de transport (2), et la surface d'enveloppe de l'élément d'accouplement (11) de l'unité d'entraînement (1) étant disposée à l'extérieur de l'élément de rouleau (9) du rouleau de transport (2).

5. Rouleau de transport (2) selon la revendication 4, **caractérisé en ce que** la surface d'enveloppe de l'élément de rouleau (9) est constituée en tant que surface de transport pour des marchandises transportées.

6. Dispositif de transport (22) avec un rouleau de transport (2) et avec un rouleau porteur (23), le rouleau de transport (2) et le rouleau porteur (23) étant raccordés l'un à l'autre par le biais d'un élément de transmission de force (13), en particulier un élément de courroie (14), **caractérisé en ce que** le rouleau de transport (2) est constitué selon la revendication 4 ou la revendication 5.

7. Dispositif de transport (22) selon la revendication 6, **caractérisé en ce que** la surface d'enveloppe du rouleau porteur (23) est constituée en tant que surface de transport pour des marchandises transportées, le rouleau de transport (2) étant, dans l'état de fonctionnement monté, décalé vers le bas dans la direction verticale par rapport au rouleau porteur (23).

8. Dispositif de transport (22) selon la revendication 6 ou 7, **caractérisé en ce qu'**il est prévu un autre rouleau porteur (23) dont la surface d'enveloppe est constituée en tant que surface d'appui pour des marchandises transportées, l'élément d'accouplement (11) du rouleau de transport (2) étant raccordé, par le biais de respectivement un élément de transmission de force (13), au rouleau porteur (23) et à l'autre rouleau porteur (23).

9. Dispositif de transport (22) selon la revendication 8, **caractérisé en ce qu'**il est prévu plusieurs rouleaux de transport (2) selon la revendication 6 ou 7, lesquels sont raccordés à un rouleau porteur (23) et à un autre rouleau porteur (23) par le biais de respectivement un élément de transmission de force (13).
